# EUROPEAN PATENT SPECIFICATION

(11) **EP 1 931 884 B1**
(45) Date of publication and mention of the grant of the patent: **08.06.2011**
(21) Application number: 06816036.5
(22) Date of filing: 04.10.2006
(51) Int. Cl.: F16B 5/00, B21D 39/03, F16B 5/04

(54) **SHEET METAL JOINT**
BLECHGELENK
JOINT EN TOLE

(30) Priority: 04.10.2005 US 242692
(43) Date of publication of application: 18.06.2008
(73) Proprietor: FEDERAL-MOGUL CORPORATION, Southfield Michigan 48034 (US)
(72) Inventor: CABANSKI, John, L., Mount Prospect, IL 60056 (US); ZURFLUH, Thomas, O., Evanston, IL 60202 (US)
(74) Representative: Kurig, Thomas
(86) International application number: PCT/US2006/038459
(87) International publication number: WO 2007/044300

(56) References cited:
- EP-A2- 1 074 807
- US-A- 3 010 199
- US-A- 3 082 850
- US-A- 3 462 805
- US-A- 3 824 757
- US-A1- 2004 012 178
- US-A1- 2005 044 915
- US-B1- 6 258 431

## Description

### BACKGROUND OF THE INVENTION

### 1. Field of the Invention

The invention relates to joint metal joint and a method of joining at least two metal sheets.

### 2. Description of Related Art

The construction of a joint between metal sheets can be accomplished by overlapping and folding the ends of the sheets. Alternatively, the sheets can be formed with tangs that are folded over one another. This type of joint is disclosed in U.S. Patent No. 3,824,757. Alternatively, the sheets can be formed with holes that are aligned and then folded over one another. This type of joint is disclosed in U.S. Patent No. 3,082,850.

US patent No. 3010 199 (corresponding to the preambles of claims 1 and 8) describes a tool and method for securing sheet metal pieces together, where tongues are formed by punching the sheets, and then the sheets are secured tightly together by bending the tongues downward into a interlocking relationship.

EP 1074807 describes a folded tube for a heat exchanger. A sheet is folded, forming a base and a top, and internal webs are folded into the sheet base and top which contact either one of the top or the base to provide a plurality of fluid ports.

US 2005/004915 discloses a method for producing a sheet metal with a plurality of fins cut and bent out of the sheet surface.

### SUMMARY OF THE INVENTION

The invention provides a sheet metal joint and a method for forming a sheet metal joint. The sheet metal joint includes first and second metal sheets disposed in parallel relation to one another. Each of the first and second metal sheets has a plurality of perforations with a tang extending from each perforation. The tangs of the second sheet and the tangs of the second metal sheet are curled together in opposite rotational directions. The tangs of the first metal sheet space the first and second metal sheets from one another and the tangs of the second metal sheet substantially fixedly engage the first and second metal sheets with respect to one another.

### BRIEF DESCRIPTION OF THE DRAWINGS

Advantages of the present invention will become more readily appreciated when considered in connection with the following detailed description and appended drawings, wherein:

Figure 1 is a schematic side view of an arrangement for forming a sheet metal joint according to an exemplary embodiment of the invention;

Figure 2 is a perspective view of a sheet having perforations according to an exemplary embodiment of the invention;

Figure 3 is a schematic side view of an arrangement for engaging two metal sheets according to an exemplary embodiment of the invention;

Figure 4 is a schematic side view of a two metal joints joined to one another in an exemplary operating environment; and

Figure 5 is side view of an exemplary embodiment of the invention wherein three metal sheets are engaged with one another.

### DETAILED DESCRIPTION OF THE PREFERRED EMBODIMENT

A plurality of different embodiments of the invention are shown in the Figures of the application. Similar features are shown in the various embodiments of the invention. Similar features have been numbered with a common two-digit reference numeral and have been differentiated by a third digit placed before the two common digits. Also, to enhance consistency, features in any particular drawing share the same two digit designation even if the feature is shown in less than all embodiments. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

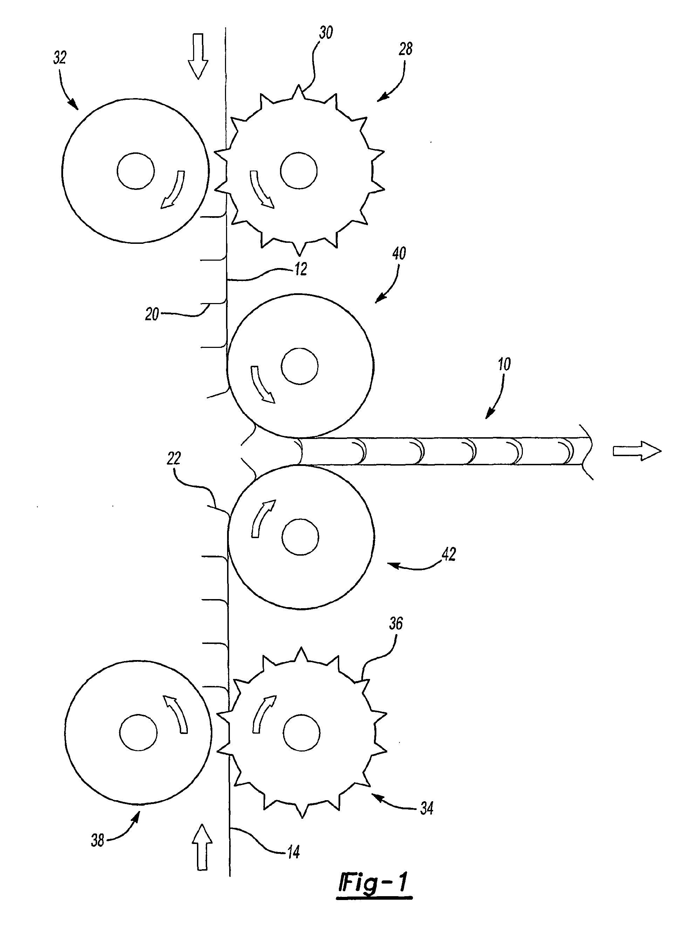

The invention provides a sheet metal joint 10 and a method for forming a sheet metal joint 10. Referring to Figures 1 - 3, the sheet metal joint 10 includes first and second metal sheets 12, 14 disposed in parallel relation to one another. Each of the first and second metal sheets 12, 14 has a plurality of perforations 16, 18, respectively, with a tang 20, 22 extending from each perforation 16, 18. The tangs 22 of the first metal sheet 12 and the tangs 22 of the second metal sheet 14 are curled together in opposite rotational directions 24, 26. The tangs 20 of the first metal sheet 12 space the first and second metal sheets 12, 14 from one another and the tangs 22 of the second metal sheet 14 substantially fixedly engage the first and second metal sheets 12, 14 with respect to one another.

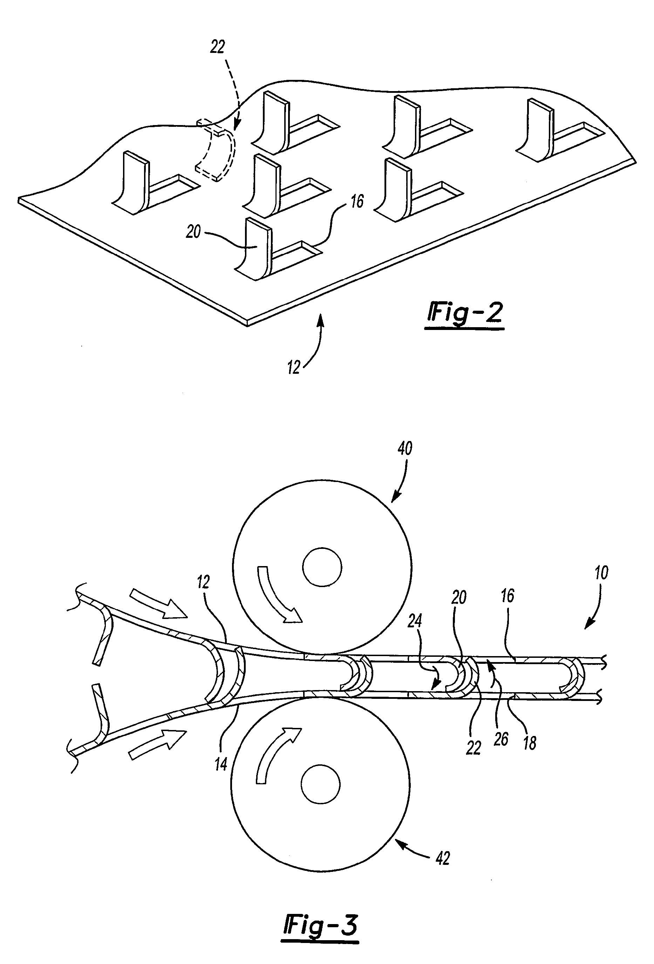

In an exemplary embodiment of the invention, the tangs 22 of the second metal sheet 14 could extend around the tangs 20 of first metal sheet 12 and through the perforations 16 of the first metal sheet. Also, the tangs 22 of the second metal sheet 14 could be wider than the perforations 16 of the first metal sheet 12. In such an embodiment of the invention, the tangs 22 of the second metal sheet 14 (shown in phantom in Figure 2) would be deformed for insertion into the perforations 16 of the first metal sheet 12.

It is noted that either the tangs 22 of the second metal sheet 14 can circle the tangs 20 of the first metal sheet 12, as shown in Figure 3, or the tangs 20 of the first metal sheet 12 can circle the tangs 22 of the second metal sheet 14, as shown in Figure 1.

Figures 1 and 3 show schematic side views of structure for forming the first exemplary embodiment of the sheet metal joint 10. The first metal sheet 12 is directed between a first roller 28 having a plurality of punches 30 and a second roller 32 having a plurality of recesses (not visible) to receive the punches 30. The perforations 16 and tangs 20 are formed by the cooperation between the rollers 28, 30. The second metal sheet 14 is directed between a first roller 34 having a plurality of punches 36 and a second roller 38 having a plurality of recesses (not visible) to receive the punches 36. The perforations 18 and tangs 22 are formed by the cooperation between the rollers 34, 38.

The first and second metal sheets 12, 14 are moved past the rollers 28, 32, 34, 38 to rollers 40, 42. The first metal sheet 12 is moved around the roller 40 with the tangs 20 extending away from the roller 40. The second metal sheet 14 is moved around the roller 42 with the tangs 22 extending away from the roller 42. Figures 1 and 3 show slightly different embodiments of structure for practicing the invention wherein, for example, Figure 1 shows the sheets 12, 14 being directed along a ninety degree change of direction by the rollers 40 and 42 while Figure 3 shows the sheets 12, 14 being directed along less than a ninety degree change of direction by the rollers 40 and 42. The rollers 40, 42 are spaced from one another such that the tangs 20 of the first metal sheet 12 and the tangs 22 of the second metal sheet 14 are overlapped and bent around one another during movement between the rollers 40, 42. Movement of the sheets 12, 14 and the rollers 28, 32, 34, 38 can be controlled by a controller so that the tangs 20 are properly aligned and received the tangs 22 prior to curling of the tangs 20, 22 between the rollers 40, 42.

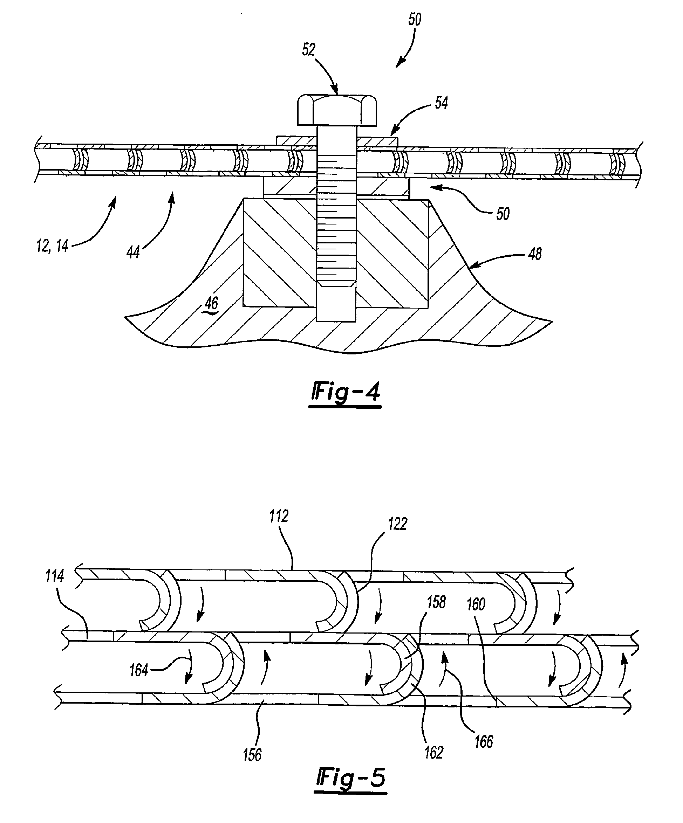

Figure 4 shows an exemplary operating environment for the joined, first and second metal sheets 12, 14. The joined, first and second metal sheets 12, 14 cooperate to define a heat shield 44. A hot component 46, such as an engine block or manifold, defines a boss 48. An isolator 50 is disposed between the heat shield 44 and the boss 48. A bolt 50 having a bolt head 52 is threadingly received in the boss 48 to fix the heat shield 44 with respect to the component 46. A washer 54 can be disposed between the heat shield 44 and the bolt head 52.

Figure 5 shows another exemplary embodiment of the invention where three sheets 112, 114, 156 are engaged with one another. The second metal sheet 114 includes a first set of tangs 122 extending toward the first metal sheet 112 and a second set of tangs 158 extending away from the first metal sheet 112. A third metal sheet 156 is disposed in parallel relation with the first and second metal sheets 112, 114. The third metal sheet 156 includes a plurality of perforations 160 with a tang 162 extending from each perforation 162. The second set of tangs 158 of the second sheet 114 and the tangs 162 of the third metal sheet 156 are curled together in opposite rotational directions 164, 166. The second set of tangs 158 of the second metal sheet 114 space the second and third metal sheets 114, 156 from one another and the tangs 162 of the third metal sheet 156 substantially fixedly engage the second and third metal sheets 114, 156 with respect to one another.

In the embodiments of the application shown in the drawings, all the tangs of one sheet surrounded by the tangs of a second sheet. However, in alternative embodiments of the invention, alternating tangs of a first sheet could be surrounded by corresponding, alternating tangs of a second sheet and vice-versa. This could be done by adjusting the geometry of the perforating rollers.

Obviously, many modifications and variations of the present invention are possible in light of the above teachings. It is, therefore, to be understood that within the scope of the appended claims, the invention may be practiced otherwise than as specifically described.

## Claims

1. A sheet metal joint (10) comprising
first (12) and second (14) metal sheets disposed in parallel relation and each having a plurality of perforations (16, 18) with a tang (20, 22) extending from each perforation,
**characterized in that** said tangs (20) of said first metal sheet (12) and said tangs (22) of said second metal sheet (14) are curled together in opposite rotational directions.

2. The sheet metal joint of claim 1 wherein said tangs (20) of said first metal sheet (12) space said first and second metal sheets from one another and said tangs (22) of said second metal sheet (14) substantially fixedly engage said first and second metal sheets with respect to one another.

3. The sheet metal joint of claim 1 wherein said tangs (22) of said second metal sheet (14) extend around said tangs (20) of first metal sheet (12) and extend through said perforations of said first metal sheet.

4. The sheet metal joint of claim 3 wherein said tangs (22) of said second metal sheet (14) are wider than said perforations (16) of said first metal sheet (12) and are deformed for insertion into said perforations of said first metal sheet.

5. The sheet metal joint of claim 1 wherein said second metal sheet (114) is further defined as having a first set of tangs (122) extending toward said first metal sheet (112) and a second set of tangs (158) extending away from said first metal sheet.

6. The sheet metal joint of claim 5 further comprising:
a third metal sheet (156) disposed in parallel relation with said first and second metal sheets and having a plurality of perforations (160) with a tang (162) extending from each perforation and
said second set of tangs (158) of said second sheet and said tangs (162) of said third metal sheet being curled together in opposite rotational directions.

7. The sheet metal joint of claim 6 wherein said second set of tangs (158) of said second metal sheet (114) space said second (114) and third (156) metal sheets from one another and said tangs (162) of said third metal sheet substantially fixedly engage said second and third metal sheets with respect to one another.

8. A method for forming a sheet metal joint (10) comprising the steps of:
punching a plurality of perforations (16,18) in first and second metal sheets (12,14) with a tang (20,22) extending from each of the perforations;
disposing the first and second metal sheets in parallel relation; and
**characterized by**
curling the tangs (20) of the first metal sheet (12) and the tangs (22) of the second metal sheet (14) together in opposite rotational directions.

9. The method of claim 8 wherein said punching step includes the step of:
directing the first and second metal sheets (12,14) individually between a first roller having a plurality of punches (30) and a second roller having a plurality of recesses to receive the punches.

10. The method of claim 8 wherein said curling step includes the steps of:
moving the first metal sheet (12) around a third roller (40) with the tangs (20) extending away from the third roller;
moving the second metal sheet (14) around a fourth roller (42) with the tangs (22) extending away from the fourth roller;
spacing the third (40) and fourth (42) rollers from one another such that the tangs (20) of the first metal sheet (12) and the tangs (22) of the second metal sheet (14) are overlapped and bent around one another during movement between the third and fourth rollers.

## Patentansprüche

1. Blechverbindung (10), umfassend:
ein erstes (12) und zweites (14) Metallblech, die parallel zueinander angeordnet sind und jeweils eine Vielzahl von Perforationen (16, 18) aufweisen, wobei sich von jeder Perforation eine Zunge (20, 22) erstreckt,
**dadurch gekennzeichnet, dass** die Zungen (20) des ersten Metallblechs (12) und die Zungen (22) des zweiten Metallblechs (14) in gegensätzliche Rotationsrichtungen ineinander aufgerollt sind.

2. Blechverbindung nach Anspruch 1, wobei die Zungen (20) des ersten Metallblechs (12) das erste und das zweite Metallblech voneinander beabstanden und die Zungen (22) des zweiten Metallblechs (14) das erste und das zweite Metallblech im wesentlichen fest miteinander verkoppeln.

3. Blechverbindung nach Anspruch 1, wobei die Zungen (22) des zweiten Metallblechs (14) sich um die Zungen (20) des ersten Metallblechs (12) erstrecken und sich durch die Perforationen des ersten Metallblechs hindurch erstrecken.

4. Blechverbindung nach Anspruch 3, wobei die Zungen (22) des zweiten Metallblechs (14) breiter sind als die Perforationen (16) des ersten Metallblechs (12) und so verformt sind, dass sie in die Perforationen des ersten Metallblechs eingesetzt werden können.

5. Blechverbindung nach Anspruch 1, wobei das zweite Metallblech (14) weiter so ausgelegt ist, dass es einen ersten Satz von Zungen (122) aufweist, die sich in Richtung des ersten Metallblechs (112) erstrecken, und einen zweiten Satz von Zungen (158), die sich von dem ersten Metallblech weg erstrecken.

6. Blechverbindung nach Anspruch 5, weiter umfassend:
ein drittes Metallblech (156), das parallel zu dem ersten und dem zweiten Metallblech angeordnet ist und eine Vielzahl von Perforationen (160) aufweist, wobei sich eine Zunge (162) von jeder Perforation erstreckt, und wobei der zweite Satz von Zungen (158) des zweiten Metallblechs und die Zungen (162) des dritten Metallblechs in gegensätzliche Rotationsrichtungen ineinander aufgerollt sind.

7. Blechverbindung nach Anspruch 6, wobei der zweite Satz von Zungen (158) des zweiten Metallblechs (114) das zweite (114) und das dritte (156) Metallblech voneinander beabstanden und die Zungen (162) des dritten Metallblechs das zweite und das dritte Metallblech im wesentlichen fest miteinander verkoppeln.

8. Verfahren zum Bilden einer Blechverbindung (10), umfassend die Schritte:
Stanzen einer Vielzahl von Perforationen (16, 18) in ein erstes und ein zweites Metallblech (12, 14), wobei sich eine Zunge (20, 22) von jeder der Perforationen erstreckt;
Anordnen des ersten und des zweiten Metallblechs parallel zueinander; und
**gekennzeichnet durch**
ineinander Aufrollen der Zungen (20) des ersten Metallblechs (12) und der Zungen (22) des zweiten Metallblechs (14) in gegensätzliche Rotationsrichtungen.

9. Verfahren nach Anspruch 8, wobei der Stanzschritt den folgenden Schritt umfasst:
Ausrichten des ersten und zweiten Metallblechs (12, 14) einzeln zwischen einer ersten Walze mit einer Vielzahl von Stanzen (30) und einer zweiten Walze mit einer Vielzahl von Aussparungen, um die Stanzen aufzunehmen.

10. Verfahren nach Anspruch 8, wobei der Einrollschritt die Schritte umfasst:
Bewegen des ersten Metallblechs (12) um eine dritte Walze (40), wobei die Zungen (20) sich von der dritten Walze weg erstrecken;
Bewegen des zweiten Metallblechs (14) um eine vierte Walze (42), wobei sich die Zungen (22) von der vierten Walze weg erstrecken;
Beabstanden der dritten Walze (40) und vierten Walze (42) voneinander so, dass die Zungen (20) des ersten Metallblechs (12) und die Zungen (22) des zweiten Metallblechs (14) sich überlappen und während einer Bewegung zwischen der dritten und der vierten Walze umeinander gebogen werden.

## Revendications

1. Joint en tôle (10) comprenant
des première (12) et deuxième tôles (14) disposées en relation parallèle et ayant chacune une pluralité de perforations (16, 18) avec un tenon (20, 22) s'étendant depuis chaque perforation,
**caractérisé en ce que** lesdits tenons (20) de ladite première tôle (12) et lesdits tenons (22) de ladite deuxième tôle (14) sont enroulés ensemble dans des directions de rotation opposées.

2. Joint en tôle selon la revendication 1, dans laquelle lesdits tenons (20) de ladite première tôle (12) écartent lesdites première et deuxième tôles l'une de l'autre et lesdits tenons (22) de ladite deuxième tôle (14) engagent essentiellement de manière fixe les première et deuxième tôles l'une par rapport à l'autre.

3. Joint en tôle selon la revendication 1, dans laquelle lesdits tenons (22) de ladite deuxième tôle (14) s'étendent autour desdits tenons (20) de la première tôle (12) et s'étendent à travers lesdites perforations de ladite première tôle.

4. Joint en tôle selon la revendication 3, dans laquelle lesdits tenons (22) de ladite deuxième tôle (14) sont plus larges que lesdites perforations (16) de ladite première tôle (12) et sont déformés pour l'insertion dans lesdites perforations de ladite première tôle.

5. Joint en tôle selon la revendication 1, dans laquelle ladite deuxième tôle (114) est en outre définie comme ayant un premier jeu de tenons (122) s'étendant en direction de ladite première tôle (112) et un second jeu de tenons (158) s'étendant à l'écart de ladite première tôle.

6. Joint en tôle selon la revendication 5, comprenant en outre :
une troisième tôle (156) disposée en relation parallèle avec lesdites première et deuxième tôles et ayant une pluralité de perforations (160) avec un tenon (162) s'étendant depuis chaque perforation et ledit deuxième jeu de tenons (158) de ladite deuxième tôle et lesdits tenons (162) de ladite troisième tôle étant enroulés ensemble dans des directions de rotation opposées.

7. Joint en tôle selon la revendication 6, dans laquelle ledit deuxième jeu de tenons (158) de ladite deuxième tôle (114) écarte lesdites deuxième (114) et troisième (156) tôles l'une de l'autre et lesdits tenons (162) de ladite troisième tôle engagent essentiellement de manière fixe les deuxième et troisième tôles l'une par rapport à l'autre.

8. Procédé destiné à former un joint en tôle comprenant les étapes de :
poinçonner une pluralité de perforations (16, 18) dans des première et deuxième tôles (12, 14) avec un tenon (20, 22) s'étendant depuis chacune des perforations ;
disposer les première et deuxième tôles en relation parallèle ; et
**caractérisé par** le fait
d'enrouler ensemble les tenons (20) de la première tôle (12) et les tenons (22) de la deuxième tôle (14) dans des directions de rotation opposées.

9. Procédé selon la revendication 8, dans lequel ladite étape de poinçonnage comprend l'étape de :
diriger les première et deuxième tôles (12, 14) individuellement entre un premier rouleau ayant une pluralité de poinçons (30) et un deuxième rouleau ayant une pluralité de creux pour recevoir les poinçons.

10. Procédé selon la revendication 8, dans lequel ladite étape d'enroulement comprend les étapes de :
déplacer la première tôle (12) autour d'un troisième rouleau (40) avec les tenons (20) s'étendant à l'écart du troisième rouleau ;
déplacer la deuxième tôle (14) autour d'un quatrième rouleau (42) avec les tenons (22) s'étendant à l'écart du quatrième rouleau ;
espacer les troisième (40) et quatrième (42) rouleaux l'un de l'autre de façon à ce que les tenons (20) de la première tôle (12) et les tenons (22) de la deuxième tôle (14) se chevauchent et soient recourbés l'un autour de l'autre pendant le mouvement entre les troisième et quatrième rouleaux.
